(19) **Europäisches Patentamt / European Patent Office / Office européen des brevets**

(11) **EP 2 295 491 B1**

(12) **EUROPEAN PATENT SPECIFICATION**

(45) Date of publication and mention
of the grant of the patent:
**07.11.2012 Bulletin 2012/45**

(51) Int Cl.:
**C08J 7/00** *(2006.01)*

(21) Application number: **10176154.2**

(22) Date of filing: **10.09.2010**

(54) **Protective film and front sheet for solar cell**

Schutzfilm und Frontfolie für Solarzelle

Film protecteur et feuille de face pour cellule solaire

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.09.2009 JP 2009212007**

(43) Date of publication of application:
**16.03.2011 Bulletin 2011/11**

(73) Proprietor: **FUJIFILM Corporation**
**Tokyo 106-0031 (JP)**

(72) Inventors:
• **Sawada, Makoto**
  **Kanagawa 258-8577 (JP)**

• **Tsukahara, Jiro**
  **Kanagawa 258-8577 (JP)**
• **Hirai, Hiroyuki**
  **Kanagawa 258-8577 (JP)**

(74) Representative: **HOFFMANN EITLE**
**Patent- und Rechtsanwälte**
**Arabellastrasse 4**
**81925 München (DE)**

(56) References cited:
WO-A1-2010/004814    WO-A2-2007/067257
DE-A1-102007 050 835    JP-A- 2000 334 373
JP-A- 2003 155 415    JP-A- 2003 295 486
JP-A- 2005 148 272    JP-A- 2008 284 411

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to a protective film which is used for protecting various devices. Particularly, the invention relates to a protective film for protecting a flexible solar cell and a front sheet for a solar cell using the protective film.

DESCRIPTION OF THE RELATED ART

In recent years, a flexible solar cell has been developed. Such a flexible solar cell requires an ultraviolet absorbable protective film because polyester material such as a gas barrier film which is used as a member composing the solar cell, or an active layer itself in an organic solar cell absorbs ultraviolet to thereby deteriorate. Since such a solar cell is placed in outside over long years, the protective film is also required to have high weatherability. Furthermore, the protective film is required to have high transparency because the solar cell absorbs sunlight energy and convert the sunlight into electrical power. Therefore, the protective film for protecting the flexible solar cell is required to have high transparency, high ultraviolet absorption ability, high weatherability and flexibility.

JP-A-2006-255927 discloses, as a protective film for a solar cell, a transparent protective film comprising an organic ultraviolet absorber such as benzotriazole series compounds. Since the protective film comprises an organic material as base material, the protective film is excellent in transparency and flexibility, but is poor in weatherability.

JP-A-2004-168057 discloses, as a protective film for a solar cell, a film obtained by laminating, on a surface of a transparent fluorine series film, an acryl series film having a higher refraction index than that of the transparent fluorine series, and then coating, on the surface of the acryl series film, a coating mixture comprising a siloxane series binder and an inorganic ultraviolet absorber. JP-A-2004-168057 also discloses that the conversion efficiency is enhanced by enhancing its light diffusion ratio by using an inorganic series ultraviolet absorber having a diameter of around 0.3 $\mu$m, which is relatively large. However, the film obtainable by using such a technique disclosed in JP-A-2004-168057 is high in haze, so that it is poor in transparency.

Although JP-A-2000-334373 does not relate to a protective film for a solar cell, it discloses a technique to form a coating layer excellent in weatherability by adding, into a siloxane series binder, an inorganic series ultraviolet absorber having a diameter of around 40 nm, which is relatively small. JP-A-2000-334373 also suggests the possibility that transparency is enhanced by using a smaller inorganic series ultraviolet absorber. However, the film obtained in JP-A-2000-334373 has a haze value of around 10%, that is, the transparency is not necessarily excellent.

SUMMARY OF THE INVENTION

As mentioned above, the protective film for a solar cell or the like is required to have high transparency, high ultraviolet absorption ability, high weatherability and flexibility, however, such a protective film had not been obtained. The inventors further have investigated and found that, when the coating layer disclosed in JP-A-2000-334373 is provided on the surface of a plastic film, and then, irradiated with ultraviolet, the coating layer is peeled from the plastic film.

The object of the invention is to solve the problem, and to provide a protective film comprising a plastic film and a coating layer and having high transparency, high ultraviolet absorption ability, high weatherability and flexibility, and not being peeled from its coating layers from the plastic film even if irradiated with ultraviolet. Furthermore, the invention relates to a front sheet for a solar cell using such a protective film.

Under the problem, the inventors have eagerly investigated and surprisingly found that, while transparency of such a film tends to be enhanced in the case of using an inorganic series ultraviolet absorber having a smaller particle size, its coating layer peels from its plastic film though irradiation of ultraviolet in the case of using an inorganic series ultraviolet absorber having a too much smaller particle size because the light catalyst effect of the inorganic ultraviolet absorber becomes notable. Especially, for nano-particles of zinc oxide, there is another problem that, in the case of using an absorber having a too much smaller particle, photo-dissolution of zinc oxide itself is caused when irradiated with ultraviolet, which reduces ultraviolet absorption ability.

The inventors further have investigated and found that, by using a core-shell type inorganic series ultraviolet absorber of which the particle size and the shell thickness are adjusted, it is possible to attain high adhesiveness between the plastic and the coating layer, high transparency, high ultraviolet absorption ability, high weatherability and flexibility even it irradiated with ultraviolet. Specifically, they have found that the above objection can be solved by the following means.

(1) A protective film comprising (i) a plastic film comprising polycarbonate, polymethylmethacrylate, polyolefin or polyethylene terephthalate, and (ii) a coating layer on the surface of the plastic film comprising a binder and core-shell type zinc oxide particles dispersed in the binder, the core-shell type zinc oxide particles having an average particle size of 50 nm or less and comprising a shell having a thickness of 1.5 nm to 20 nm, and the binder having an average composition as measured by nuclear magnetic resonance and/or gel permeation chromatography using polystyrene as a standard substance represented by the formula $R^1_mSi(OR^2)_nO_{(4-m-n)/2}$, wherein $R^1$ is a methyl group, an ethyl group or a phenyl group, $R^2$ is a $C_{1-8}$ alkyl group, $R^{1'}$ s may be the same or different, $R^2$'s may be the same or different, and m and n satisfy $0.2 \leqq m \leqq 2$, $0.01 \leqq n \leqq 3$ and $m+n<4$.

(2) The protective film according to (1), wherein the shell comprises an oxide comprising at least one selected from Si, Al, Zr, Sn, Sb and a rare earth element.

(3) The protective film according to (1) or (2), wherein the coating layer comprises the core-shell type zinc oxide in an amount of 10% by weight or more.

(4) The protective film according to any one of (1) to (3), wherein the plastic film comprises polyethylene terephthalate.

(5) The protective film according to any one of (1) to (4), wherein the shell comprises silicon oxide.

(6) The protective film according to any one of (1) to (5), wherein the shell has a thickness of 2 to 10 nm.

(7) The protective film according to any one of (1) to (6), wherein the core-shell type zinc oxide particles have an average particle size of 5 nm or more.

(8) The protective film according to any one of (1) to (7), which comprises a barrier layer on the plastic film or on the coating layer.

(9) The protective film according to (8), which comprises a barrier layer on the plastic film.

(10) The protective film according to (8) or (9), wherein the barrier layer comprises at least one organic layer and at least one inorganic layer.

(11) The protective film according to any one of (1) to (10), which has an absorbance at 350 nm of 2 or more.

(12) The protective film according to any one of (1) to (11), which has a haze value of 5% or less.

(13) The protective film according to any one of (1) to (12), wherein the core of the core-shell type zinc oxide particles has an average particle size of 5 to 40 nm.

(14) The protective film according to any one of (1) to (13), wherein the binder comprises a curing catalyst.

(15) The protective film according to any one of (1) to (14), wherein the binder has a weight-average molecular weight (Mw) of 1000 to 10000.

(16) The protective film according to any one of (1) to (15), wherein the coating layer has a thickness of 1 to 50 $\mu$m.

(17) The protective film according to any one of (1) to (16), wherein the protective film has a thickness of 1 to 1000 $\mu$m.

(18) The protective film according to any one of (1) to (17), wherein the coating layer comprises the binder in an amount of 90 to 60% by weight.

(19) A front sheet for a solar cell, comprising the protective film according to any one of (1) to (18).

The invention made it possible to provide a protective film having high transparency, high ultraviolet absorption ability, high weatherability and flexibility and being capable of achieving high adhesiveness between each layers of the laminate film even if irradiated with ultraviolet.

BRIEF DESCRIPTION OF THE DRAWING

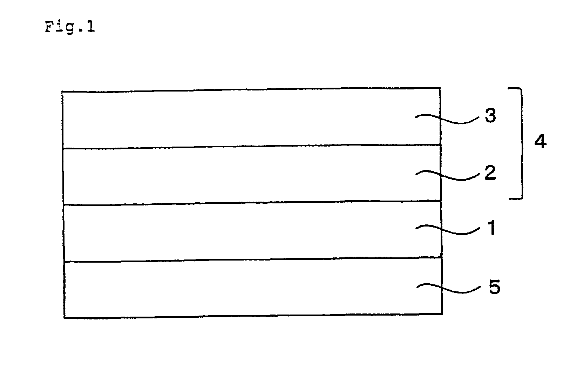

Fig. 1 is a diagrammatic illustration showing a layer structure of the protective film having the barrier laminate formed on Example of the invention, wherein 1 stands for a plastic film, 2 stands for an organic layer, 3 stands for an inorganic layer, 4 stands for a barrier layer, and 5 stands for a coating layer.

DESCRIPTION OF SPECIFIC EMBODIMENTS

The contents of the invention are described in detail hereinunder. In this description, the numerical range expressed by the wording "a number to another number" means the range that falls between the former number indicating the lowermost limit of the range and the latter number indicating the uppermost limit thereof.

The protective film of the invention has a plastic film and a coating layer on the surface of the plastic film, wherein the coating layer comprises a binder and core-shell type zinc oxide particles dispersed in the binder, the core-shell type zinc oxide particles have an average particle size of 50 nm or less and comprises a shell having a thickness of 1.5 nm to 20 nm, and the binder has an average composition represented by the following formula (1);

$$\text{formula (1)} \qquad R^1_mSi(OR^2)_nO_{(4-m-n)/2}$$

wherein $R^1$ is a methyl group, an ethyl group, or a phenyl group, $R^2$ is an alkyl group having carbon atoms or 1 to 8, $R^1$'s may be the same or different, $R^2$'s may be the same or different, and m and n satisfy $0.2 \leqq m \leqq 2$, $0.01 \leqq n \leqq 3$, and $m+n<4$.

$R^1$ is a methyl group, an ethyl group and a phenyl group, preferably a methyl group and/or an ethyl group. $R^2$

is preferably a methyl group and/or an ethyl group. Two or more kinds of $R^1$'s and $R^2$'s each may be included.

Furthermore, m and n each preferably satisfy $0.2 \leqq m \leqq 1$, more preferably $0.1 \leqq n \leqq 2$.

The average composition means herein a composition specified according to a measured result of NMR(nuclear magnetic resonance spectrum),and/or according to a measured result of GPC (gel permeation chromatography) using polystyrene as a standard substance.

The weight-average molecular weight (Mw) of the binder used in the invention is preferably 1000 to 10000.

By using such a constitution, its high adhesiveness between the plastic film and the coating layer is attained, and its high transparency, high ultraviolet absorption ability, high weatherability and flexibility can be attained even if the film is irradiated with ultraviolet.

The plastic film comprises polycarbonate, polymethyl methacrylate, polyolefin or polyethylene terephthalate. By employing such a resin, a film having high weatherability can be obtained at low cost.

The thickness of the plastic film is not specifically limited, and is preferably 1 to 1000 $\mu$m, more preferably 5 to 200 $\mu$m.

The core-shell type zinc oxide particles used in the invention are **characterized in that** they have an average particle size of 50 nm or less and comprise a shell having a thickness of 1.5 to 20 nm.

The average particle size of the core-shell type zinc oxide particles is preferably 2 to 50 nm, more preferably 3 to 50 nm, further more preferably 5 to 30 nm. By setting to such a range, higher transparency of the film can be achieved when such particles are dispersed into the binder.

The shell thickness is preferably 1.5 to 10 nm, more preferably 2 to 5 nm. The shell thickness makes it possible to suppress photo-catalytic ability of zinc oxide and photo dissolution of zinc oxide without losing its transparency.

The average particle size of the zinc oxide is preferably 5 to 40 nm, more preferably 5 to 25 nm. By setting to such a range, the obtained film achieves higher ultraviolet absorption ability without losing its transparency.

Material for the shell portion of the core-shell type zinc oxide particles is widely elected from among well-known shell materials. The material for the shell portion is preferably an oxide comprising at least one element from Si, Al, Zr, Sn, Sb and rare earth elements, more preferably an oxide comprising Si and/or Al, further more preferably an oxide comprising at least Si. Of course, the material for the shell portion may be composed of two or more shell materials.

The core-shell type zinc oxide is preferably contained in an amount of 10% by weight or more, more preferably in an amount of from 10 to 30% by weight. By setting to such a range, the obtained film attains higher ultraviolet absorption ability without losing its transparency.

The binder is preferably contained in the coating layer in an amount of 90% by weight or less, more preferably in a range from 90% by weight to 60% by weight. By setting to such a range, the obtained film has higher adhesiveness between the plastic film and the coating layer.

The thickness of the coating layer is not particularly limited, and is preferably 1 to 50 $\mu$m, more preferably 2 to 20 $\mu$m.

One or more kinds of the core-shell type zinc oxides in the invention may be contained in the coating layer.

In addition, a curing catalyst may be added into the coating layer in order to accelerate a condensation reaction of the binder and to cure a coating layer. Examples of such a curing catalyst include metal salts of carbonic acid such as alkyltitanate, tin octylate, dibutyltin dilaurate, and dioctyltin dimalate; amine salts such as dibutyl amine-2-hexoate, dimethyl amine acetate, and ethanolamine acetate; quaternary ammonium salts of carboxylic acid such as tetramethylammonium acetate; amines such as tetra ethyl pentamine; amine series silane coupling agents such as N-$\beta$-aminoethyl-$\gamma$-aminopropyl methoxy trimethoxysilane, and N-$\beta$-aminoethyl-$\gamma$-aminopropyl methyl dimethoxy silane; acids such as p-toluenesulfonic acid, phthalic acid, and hydrochloric acid; aluminium compounds such as aluminium alkoxide, and aluminium chelate; alkali series catalysts such as potassium hydroxide, titanium compounds such as tetraisopropyl titanate, tetrabutyl titanate, and titanium tetra acetyl acetate; halogenated silane such as methyltrichlorosilane, dimethyl dichloro silane, and trimethyl monochloro silane, and the like. Other compounds which are effective to the curing reaction of the binder may be used without limitations.

The amount of the curing catalyst to be added is preferably 0.001 to 20 parts by weight, relative to 100 parts weight of the binder component, more preferably 0.005 to 10 parts by weight, relative to 100 parts weight of the binder component. When the amount of the curing catalyst to be added is less than 0.001 parts by weight, the binder may sometimes not cure. When the amount of the curing catalyst to be added is more than 20 parts by weight, the coating layer may sometimes deteriorate in heat resistance or weatherability.

The core-shell type zinc oxide particle in the invention can be prepared according to well-known methods. Examples thereof include methods disclosed in JP-A-2004-59421 and JP-A-2001-58821.

The dispersion of the core-shell type zinc oxide into the binder can be carried out by well-known methods, using conventional mixture apparatus such as sand mill, ball mill, and paint shake. The core-shell type zinc oxide is preferably dispersed by using the same material as that of the binder and subjected to surface treatment, which provides dispersion stability in the coating composition and attains the uniform dispersion even if the film is cured.

The protective film of the invention may have various functional layers on the plastic film or the coating layer without diverting the scope of the invention. Examples of the functional layer include a matting agent layer, a protective layer, an antistatic layer, a smoothening layer, an adhesiveness improving layer, a light shielding layer, an antireflection layer, a hard coat layer, a stress relaxing layer, an antifogging layer, an anti-soiling layer, a printable layer, an adhesive layer, a barrier layer, etc.

The barrier layer may be provided on the plastic film or the coating layer, preferably on the plastic film. The barrier layer may be disposed on the surface of the plastic film or be disposed on the plastic film via another functional layer.

The barrier layer preferably comprises at least one organic layer and at least one inorganic layer, and may comprise two or more organic layers and two or more inorganic layers. The organic layer may be referred to as the description in JP-A-2009-081123, paragraphs from 0026 to 0052. The inorganic layer may be referred to as the description in JP-A-2003-081123, paragraphs 0024 and 0025.

The absorbance of the protective film of the invention may be 2 or more at wavelength of 350 nm, and may be further 2.5 or more at wavelength of 350 nm.

The haze of the protective film of the invention may be controlled to be 5% or less, and further may be controlled to be 3% or less.

The protective film of the invention can be used for various applications, preferably a protective member of a sheet used for a solar cell, particularly preferably of a protective member of a front sheet used for a solar cell.

(Solar Cell)

The protective film of the invention can be used for a protective member of a sheet used for a solar cell. Solar cells generally have an active part which practically operates as a solar cell between a pair of substrates. The protective film of the invention may be used as a protective member for one or both of the pair of substrates, preferably is used as a protective member for a front sheet for a solar cell. In addition, the protective film itself may be used as a sheet for a solar cell.

The solar cell devices for which the protective film of the invention is favorably used are not specifically defined. For example, they include single crystal silicon-based solar cell devices, polycrystalline silicon-based solar cell devices, single-junction or tandem-structure amorphous silicon-based solar cell devices, gallium-arsenic (GaAs), indium-phosphorus (InP) or the like III-V Group compound semiconductor-based solar cell devices, cadmium-tellurium (CdTe) or the like II-VI Group compound semiconductor-based solar cell devices, copper/indium/selenium (CIS-based), copper/indium/gallium/selenium (CIGS-based), copper/indium/gallium/selenium/sulfur (CIGSS-based) or the like I-III-VI Group compound semiconductor-based solar cell devices, dye-sensitized solar cell devices, organic solar cell devices, etc. Above all, in the invention, the solar cell devices are preferably copper/indium/selenium (CIS-based), copper/indium/gallium/selenium (CTGS-based), copper/indium/gallium/selenium/sulfur (CIGSS-based) or the like I-III-VI Group compound semiconductor-based solar cell devices.

EXAMPLES

The characteristics of the invention are described more concretely with reference to the following Examples. In the following Examples, the material used, its amount and the ratio, the details of the treatment and the treatment process may be suitably modified or changed not overstepping the sprit and the scope of the invention. Accordingly, the invention should not be limitatively interpreted by the Examples mentioned below.

1. Formation of Protective Films and Samples for Test

Example 1

(Preparation of Binder Composition)

A binder composition was prepared by mixing 100 parts by weight of alkoxy silicon oligomer as a siloxane series binder (manufactured by Shin-Etsu Chemical Co., Ltd., X-40-9250), 5 parts by weight of titanium series curing catalyst (manufactured by Shin-Etsu Chemical Co., Ltd., D-20) and 100 parts by weight of butanol.

(Preparation of Core-shell Type Zinc Oxide Particles-containing Butanol Dispersion)

To 10 parts by weight of core-shell type zinc oxide particles (manufactured by Sakai Chemical Industry Co., Ltd.; the average particle size is 24 nm, the core is a ZnO particle having an average particle size of 20 nm, the shell composition is $SiO_2/Al_2O_3$ and the shell thickness is 2 nm), 100 parts by weight of butanol and 50 parts by weight of alkoxysilicon oligomer (manufactured by Shin-Etsu Chemical Co., Ltd., X-40-9250) were added, and then dispersed with a planetary ball mill, to thereby obtain butanol dispersion comprising the core-shell type zinc oxide particles-containing butanol dispersion.

(Preparation of Coating Composition)

The core-shell type zinc oxide particles-containing butanol dispersion was added into the binder composition so as to have the content of the core-shell type zinc oxide particles of 20% by weight to the coating composition, and then stirred to thereby obtain the coating composition.

(Formation of Protective Film)

On a polyethylene terephthalate film (manufactured by Fujifilm Corporation, FQ125), the above coating composition was coated so as to have a thickness of $5\mu$m, and then dried for 6 hours at room temperature to thereby obtain a protective film.

For measuring ultraviolet absorption retention, on a glass substrate, the above coating composition was coated so as to have a thickness of $5\mu$m, and then dried for 6 hours at room temperature to thereby obtain a sample for the test.

Example 2

A protective film and a sample for the test were obtained according to the same method as that in Example 1, except that the core-shell type zinc oxide particle was replaced with a core-shell type zinc oxide particle (manufactured by Sakai Chemical Industry Co., Ltd., FINEX 50W-LP2, the average particle size is 30 nm, the core is a ZnO particle having an average size of 20 nm, the shell composition is $SiO_2$, the shell thickness is 5 nm.).

Example 3

Core-shell type zinc oxide particles were prepared according to the method described in JP-A-2004-59421, Example 1. The obtained core-shell type zinc oxide particles were as follows;
the average particle size was 33 nm,
the core was a ZnO particle having an average particle size of 27 nm,
the shell composition was $SiO_2$, and
the shell thickness was 3 nm.
Using the obtained core-shell type zinc oxide particles, a protective film and a sample for the test was obtained according to the method in Example 1.

Example 4

A protective film and a sample for the test were obtained according to the same method as that in Example 1, except that the core-shell type zinc oxide particle was replaced with a core-shell zinc oxide particle (manufactured by Showa Denko K.K., maxlight ZS-032, the average particle size is 35 nm, the core is a ZnO particle having an average particle size of 25 nm, the shell composition is $SiO_2$, the shell thickness is 5 nm.).

Example 5

(Synthesis of Core-shell Type Zinc Oxide Particles)

Using FINEX-50 manufactured by Sakai Chemical Industry Co., Ltd. as raw material of zinc oxide, core-shell type zinc oxide particles were prepared at a maturing temperature of 65 °C according to the method described in Example 1 in JP-A-2004-59421.
The obtained core-shell type zinc oxide particles were as follows:

the average particle size was 40 nm,
the core was a ZnO particle having an average particle size of 20 nm,
the shell composition was $SiO_2$, and
the shell thickness was 10 nm.

(Formation of Protective Film)

A protective film and a sample for the test were obtained according to the same method as that in Example 1, except that the core-shell type zinc oxide particles were replaced with the above particles.

Example 6

(Synthesis of Core-shell Type Zinc Oxide Particles)

Using FINEX-30 manufactured by Sakai Chemical Industry Co., Ltd. as raw material of zinc oxide, core-shell type zinc oxide particles were prepared at a maturing temperature of 50 °C according to the method described in Example 1 in JP-A-2004-59421.
The obtained core-shell type zinc oxide particles were as follows:

the average particle size was 45 nm,
the core was a ZnO particle having an average particle size of 35 nm,
the shell composition was $SiO_2$, and
the shell thickness was 5 nm.

(Formation of Protective Film)

A protective film and a sample for the test were obtained according to the same method as that in Example 1, except that the core-shell type zinc oxide particles were replaced with the above particles.

Comparative Example 1

(Synthesis of Zinc Oxide Particles)

To 65 parts by weight of zinc acetate dihydrate, 150 parts by weight of methanol was added to thereby obtain a clouded solution. To this, 150 parts by weight of octylamine was added and stirred for 20 minutes to thereby obtain a clear solution. To this, 30 parts by weight of potassiumhydrate dissolved in 100 parts by weight of methanol was added to thereby obtain a clouded solution again. Then, the solution was centrifuged at 4000 rpm for 30 minutes followed by removing its supernatant, which was repeated three times, to thereby obtain white powder. To this, 200 parts by weight of 1-buthanol was added, to thereby obtain zinc oxide nano particles-butanol dispersion. The obtained zinc oxide was ZnO particles having an average particle size of 4 nm.

(Formation of Protective Film)

A protective film and a sample for the test were obtained according to the same method as that in Example 1, except that the core-shell type zinc oxide particles were replaced with the above particles.

Comparative Example 2

(Synthesis of Zinc Oxide Particles)

Using FINEX-50 manufactured by Sakai Chemical Industry Co., Ltd. as raw material of zinc oxide, core-shell type zinc oxide particles were prepared at a maturing temperature of 80 °C according to the method described in Example 1 in JP-A-2004-59421.
The obtained core-shell type zinc oxide particles were as follows:

the average particle size was 64 nm,
the core was a ZnO particle having an average particle size of 20 nm,
the shell composition was $SiO_2$, and
the shell thickness was 22 nm.

(Formation of Protective Film)

A protective film and a sample for the test were obtained according to the same method as that in Example 1, except that the core-shell type zinc oxide particles were replaced with the above particles.

Comparative Example 3

100 parts by weight of methyl trimethoxy silane, 20 parts by weight of tetramethoxy silane, 150 parts by weight of isopropyl alcohol organosilica sol (manufactured by JGC Catalysts and Chemicals Ltd., OSCAL1432, the content of $SiO_2$ was 30% by weight), 40 parts by weight of dimethyldimethoxy silane and 100 parts by weight of isopropyl alcohol were mixed, and 200 parts by weight of water was further added and stirred. This was controlled to have a weight average molecular (Mw) of 1200 in a thermostatic bath at 60°C, thereby preparing silicon alkoxide series coating composition.

To 50 parts by weight of methyltrimethoxysilane, 40 parts by weight of zinc oxide fine particles having an average particle size of 40 nm, 5 parts by weight of carbonic acid series dispersant and 5 parts by weight of diluting solvent were added and stirred with a dispel for 30 minutes, and then was dispersed using glass beads having a size of 1 mm with a disperser (manufactured by WAB, DYNO-Mill, the flow rate is 25 kg/hr, the vessel bulk is 1.5 1, repeated five times), to thereby obtain zinc oxide fine particles mill base.

To the above silicon alkoxide series coating composition, the zinc oxide fine particles mill base was added so that the zinc oxide fine particles having an average particle size of 40 nm was contained in an amount of 20% by weight to the silicon alkoxide series coating composition. By the above method, the coating composition disclosed in JP-A-2000-334373 was prepared.

A protective film and a sample for the test were obtained according to that in Example 1, except that the coating composition was replaced with the above coating composition.

The shell thickness and the particles size of the core-shell type zinc oxide particles in the above Examples and Comparative Examples were shown in the table below.

[Table 1]

| Thickness of Shell nm | Core-shell Particle size nm | | | | | | | |
|---|---|---|---|---|---|---|---|---|
| | 4 | 24 | 30 | 33 | 35 | 40 | 45 | 64 |
| 0 | Comparative Example 1 | | | | | Example 3 | | |
| 2 | | Example 1 | | | | | | |
| 3 | | | | Example 3 | | | | |
| 5 | | | Example 2 | | Example 4 | | Example 6 | |
| 10 | | | | | | Example 5 | | |
| | | | | | | | | |
| 22 | | | | | | | | Comparative Example 2 |

Example 7 (Change of Kind of Binder)

A protective film and a sample for the test were obtained according to the same method as that in Example 1, except that the siloxane series binder X-40-9250 was replaced with a binder composed of 80 parts by weight of X-40-9250 and 20 parts by weight of KR-500 (manufactured by Shin-Etsu Chemical Co., Ltd.) in the preparation of binder composition.

Example 8 (Change of Kind of Binder)

A protective film and a sample for the test were obtained according to the same method as that in Example 1, except that the siloxane series binder X-40-9250 was replaced with a binder composed of 80 parts by weight of X-40-9250, 10 parts by weight of X-40-9225(manufactured by Shin-Etsu Chemical Co., Ltd.) and 10 parts by weight of KR-500 (manufactured by Shin-Etsu Chemical Co., Ltd.) in the preparation of binder composition.

Example 9 (Change of Kind of Plastic Film)

A protective film was obtained according to the same method as that in Example 1, except that the polyethylene terephthalate film was replaced with a polymethylmethacrylate film (manufactured by Sumitomo Chemical Co. Ltd., technolloy S001, having a thickness of 75 μm).

Example 10 (Change of Kind of Plastic Film)

A protective film was obtained according to the same method as that in Example 1, except that the polyethylene terephthalate film was replaced with a polycarbonate film (manufactured by Teijin Chemicals Ltd., Pure-Ace, having a thickness of 100μm).

For the obtained protective films and samples for the test, the following evaluations were carried out.

(Haze Measurement)

According to JIS K7361 and JIS K7361-1, haze for each of the protective films was measured using a haze meter (manufactured by Nippon Denshioku Industries Co., Ltd., NDH 5000).

(Absorbance)

Absorbance spectrum at 350 nm for each of the samples for the test was measured using an ultraviolet-visible spectralphotometer (manufactured by JASCO Corporation, V-560).

The absorbance spectrum was measured for the samples for the test instead of the protective films of the present invention because a plastic film which is used in the protective film in Examples may not correctly measured for its absorbance spectrum according to this measuring method. This is because ultraviolet absorption capacity of a protective layer such as in Comparative Example 1 is reduced by ultraviolet exposure, and a plastic film which is the underlayer of such a protective layer deteriorates and turns yellow after the ultraviolet expose, so that the absorbance for the protective layer itself may not be correctly measured. However, it was confirmed that absorbance value measured for the samples for the tests shows a similar tendency to that for the corresponding protective film. This is because the clear and colorless PET film of which the protective layer protects from ultraviolet and suppresses its deterioration has very little absorbance at 350 nm. Thus, each of the samples for the test shows absorbance of the corresponding protective film.

(Ultraviolet Absorbance Retention)

Ultraviolet exposure test to the samples for the test was carried at 0.53kW/m$^2$ (wavelength was 300 to 400 nm) for 1000 hours using a Metaling Vertical Weather Meter (manufactured by Suga Test Instruments Co., Ltd., MV3000) . The test was carried out under the following condition;

black panel temperature was 63°C, and
humidity in a basin was 50%.

Absorbance at 350 nm before and after the above ultraviolet exposure test was measured using an ultraviolet-visible spectralphotometer (manufactured by JASCO Corporation, V-560). The results are shown according to the following formula;

```
ultraviolet absorbance retention (%) =
(absorbance at 350 nm after ultraviolet exposure test)/
(absorbance at 350 nm before ultraviolet exposure test) *100
```

(Flexibility Evaluation According to Bending Test)

Bending test was carried out according the following method. The protective film after the above ultraviolet exposure test was cut into 10 cm x 10 cm, and then, the edges of the protective film were stuck to form cylindrical shape so that the coating layer becomes outside. The cylindrical shape-protective film was put between two transfer rollers each having a diameter of 12 mm, at a tension of about 1 N, and was transferred as it was turned around at 30 cm/min with careful attention to keep complete contact between the laminate film and the roller and not to slide the laminate film. After that, visual observation of crack which occurs on the protective film was carried out.

○: crack did not occur.

✕: crack occurred.

(Adhesion after Bending Test)

After the above bending test, adhesion of a protective film was tested in a cross-cut peeling test according to JIS K5400. The surface of the protective film was cut with a cutter knife at an angle of 90° to the film surface, at intervals of 1 mm, thereby forming 100 cross cuts at intervals of 1 mm. A 2 cm wide Mylar Tape (manufactured by Nitto Denko Corporation, polyester tape No. 31B) was stuck to it, and using a tape peeling tester, the tape was peeled off. Of the 100 cross cuts on the surface of the sample, the number (n) of the cross cuts having remained on the surface of the sample without being peeled away was counted. The results are shown the table below.

[Table 2]

|  | Haze Measurement (%) | Absorbance | Ultraviolet Absorbance Retention (%) | Flexibilly Evaluation According to Bending Test | Adhesion after the bending test (n/100) |
|---|---|---|---|---|---|
| Example 1 | 1.5 | 2.2 | 99.4 | ○ | 98 |
| Example 2 | 2.2 | 2.2 | 98.9 | ○ | 97 |
| Example 3 | 2.8 | 2.1 | 99.2 | ○ | 96 |
| Example 4 | 3.1 | 2.1 | 98.9 | ○ | 97 |
| Example 5 | 3.5 | 2.1 | 99.1 | ○ | 98 |
| Example 6 | 4.7 | 2.1 | 99.2 | ○ | 96 |
| Example 7 | 1.6 | 2.2 | 99.0 | ○ | 97 |
| Example 8 | 1.5 | 2.2 | 99.1 | ○ | 97 |
| Example 9 | 1.5 | 2.2 | 99.4 | ○ | 89 |
| Example 10 | 1.5 | 2.2 | 99.4 | ○ | 88 |
| Com. Exam.1 | 0.7 | 2.0 | 5.0 | x | 0 |
| Com. Exam.2 | 18.8 | 2.1 | 99.2 | ○ | 84 |
| Com. Exam.3 | 15.3 | 1.7 | 90.1 | x | 4 |

2. Protective Film Having Barrier Laminate

A protective film having a layer structure shown in Fig. 1 was formed. On a surface of a polyethylene telepthalate film (manufactured by Toray Industries, Inc., T60), an organic layer 2 and an inorganic layer 3 were formed according to the same method as that of Sample 101 in Example in JP-A-2009-081123, thereby forming a barrier layer 4. A coating layer 5 was formed on the surface at the side opposite to the barrier layer side of the film.

3. Formation of Front Sheet for Solar Cell

The protective film having the barrier layer in the above Example and the CIS series thin film solar cell described in Example 1 in JP-A-2009-99973 were stuck using ethylene vinyl acetate (EVA) resin film as an adhesive, thereby forming a solar cell. It was confirmed that the solar cell is operative.

Claims

1. A protective film comprising (i) a plastic film comprising polycarbonate, polymethylmethacrylate, polyolefin or polyethylene terephthalate, and (ii) a coating layer on the surface of the plastic film comprising a binder and core-shell type zinc oxide particles dispersed in the binder, the core-shell type zinc oxide particles having an average particle size of 50 nm or less and comprising a shell having a thickness of 1.5 nm to 20 nm, and the binder having an average composition as measured by nuclear magnetic resonance and/or gel permeation chromatography using polystyrene as a standard substance represented by the formula $R^1_m Si (OR^2)_n O_{(4-m-n)/2}$, wherein $R^1$ is a methyl group, an ethyl group or a phenyl group, $R^2$ is a $C_{1-8}$ alkyl group, $R^1$'s may be the same or different, $R^2$'s may be the same or different, and m and n satisfy $0.2 \leqq m \leqq 2$, $0.01 \leqq n \leqq 3$ and $m+n<4$.

2. A protective film according to Claim 1, wherein the shell comprises an oxide comprising at least one of Si, Al, Zr, Sn, Sb and a rare earth element.

3. A protective film according to Claim 1 or Claim 2, wherein the coating layer comprises the core-shell type zinc oxide in an amount of 10% by weight or more.

4. A protective film according to Claim 1 or Claim 3, wherein the shell comprises silicon oxide.

5. A protective film according to any preceding Claim, wherein the shell has a thickness of 2 to 10 nm.

6. A protective film according to any preceding Claim, wherein the core-shell type zinc oxide particles have an average particle size of 5 nm or more.

7. A protective film according to any preceding Claim, which comprises a barrier layer on the plastic film or on the coating layer.

8. A protective film according to Claim 7, which comprises a barrier layer on the plastic film.

9. A protective film according to Claim 7 or Claim 8, wherein the barrier layer comprises at least one organic layer and at least one inorganic layer.

10. A protective film according to any preceding Claim, which has an absorbance at 350 nm of 2 or more.

11. A protective film according to any preceding Claim, which has a haze value of 5% or less.

12. A protective film according to any preceding Claim, wherein the core of the core-shell type zinc oxide particles has an average particle size of 5 to 40 nm.

13. A front sheet for a solar cell comprising a protective film as defined in any preceding Claim.

**Patentansprüche**

1. Schutzfilm bzw. -folie, umfassend (i) einen Kunststofffilm bzw. -folie, umfassend Polycarbonat, Polymethylmethacrylat, Polyolefin oder Polyethylenterephthalat, und (ii) eine Beschichtungsschicht auf der Oberfläche des Kunststofffilms bzw. -folie, umfassend ein Bindemittel und Zinkoxidpartikel vom Kern-Schale-Typ, dispergiert in dem Bindemittel, wobei die Zinkoxidpartikel vom Kern-Schale-Typ eine mittlere Partikelgröße von 50 nm oder kleiner aufweisen und eine Schale mit einer Dicke von 1,5 nm bis 20 nm umfassen, und worin das Bindemittel eine durchschnittliche Zusammensetzung aufweist, gemessen mittels NMR und/oder Gelpermeationschromatografie unter Verwendung von Polystyrol als Standardsubstanz, die dargestellt wird durch die Formel $R^1_m Si(OR^2)_n O_{(4-m-n)/2}$, worin $R^1$ eine Methylgruppe, eine Ethylgruppe oder eine Phenylgruppe ist, $R^2$ eine $C_{1-8}$-Alkylgruppe ist, die $R^1$ gleich oder verschieden sein können, die $R^2$ gleich oder verschieden sein können, und m und n die Beziehungen $0,2 \leq m \leq 2$, $0,01 \leq n \leq 3$ und $m + n < 4$ erfüllen.

2. Schutzfilm bzw. -folie gemäß Anspruch 1, worin die Schale ein Oxid umfasst, das mindestens eine von Si, Al, Zr, Sn, Sb und einem Seltenerdelement umfasst.

3. Schutzfilm bzw. -folie gemäß Anspruch 1 oder Anspruch 2, worin die Beschichtungsschicht das Zinkoxid vom Kern-Schale-Typ in einer Menge von 10 Gew.% oder mehr umfasst.

**4.** Schutzfilm bzw.-folie gemäß Anspruch 1 oder Anspruch 3, worin die Schale Siliziumoxid umfasst.

**5.** Schutzfilm bzw. -folie gemäß irgendeinem vorhergehenden Anspruch, worin die Schale eine Dicke von 2 bis 10 nm aufweist.

**6.** Schutzfilm bzw. -folie gemäß irgendeinem vorhergehenden Anspruch, worin die Zinkoxidpartikel vom Kern-Schale-Typ eine mittlere Partikelgröße von 5 nm oder größer aufweisen.

**7.** Schutzfilm bzw. -folie gemäß irgendeinem vorhergehenden Anspruch, welche(r) eine Barrierenschicht auf dem Kunststofffilm bzw. der -folie oder auf der Beschichtungsschicht umfasst.

**8.** Schutzfilm bzw. -folie gemäß Anspruch 7, welche(r) eine Barrierenschicht auf dem Kunststofffilm bzw. der -folie umfasst.

**9.** Schutzfilm bzw. -folie gemäß Anspruch 7 oder Anspruch 8, worin die Barrierenschicht mindestens eine organische Schicht und mindestens eine anorganische Schicht umfasst.

**10.** Schutzfilm bzw. -folie gemäß irgendeinem vorhergehenden Anspruch, welche(r) eine Absorptionsfähigkeit von 2 oder größer bei 350 nm aufweist.

**11.** Schutzfilm bzw. -folie gemäß irgendeinem vorhergehenden Anspruch, der/die einen Trübungswert von 5 % oder kleiner aufweist.

**12.** Schutzfilm bzw. -folie gemäß irgendeinem vorhergehenden Anspruch, worin der Kern der Zinkoxidpartikel vom Kern-Schale-Typ eine mittlere Partikelgröße von 5 bis 40 nm aufweist.

**13.** Frontfolie für eine Solarzelle, umfassend einen Schutzfilm bzw. -folie gemäß irgendeinem vorhergehenden Anspruch.

**Revendications**

**1.** Film protecteur comprenant (i) un film plastique comprenant du polycarbonate, du poly(méthacrylate de méthyle), une polyoléfine ou du poly(éthylène téréphtalate), et (ii) une couche de revêtement sur la surface du film plastique comprenant un liant et des particules d'oxyde de zinc de type noyau-enveloppe dispersées dans le liant, les particules d'oxyde de zinc de type noyau-enveloppe présentant une taille moyenne de particule de 50 nm ou inférieure et comprenant une enveloppe ayant une épaisseur de 1,5 nm à 20 nm, et le liant ayant une composition moyenne comme mesurée par résonance magnétique nucléaire et/ou chromatographie par perméation sur gel en utilisant du polystyrène comme substance étalon représenté par la formule $R^1_m Si(OR^2)_n O_{(4-m-n)/2}$, où $R^1$ est un groupe méthyle, un groupe éthyle ou un groupe phényle, $R^2$ est un groupe alkyle en $C_{1-8}$, les $R^1$ peuvent être identiques ou différents, les $R^2$ peuvent être identiques ou différents, et m et n satisfont $0,2{\leqq}m{\leqq}2$, $0,01{\leq}n{\leq}3$ et $m+n<4$.

**2.** Film protecteur selon la revendication 1, dans lequel l'enveloppe comprend un oxyde comprenant au moins l'un parmi Si, Al, Zr, Sn, Sb et un élément de terres rares.

**3.** Film protecteur selon la revendication 1 ou la revendication 2, dans lequel la couche de revêtement comprend l'oxyde de zinc de type noyau-enveloppe dans une quantité de 10 % en masse ou supérieure.

**4.** Film protecteur selon la revendication 1 ou la revendication 3, dans lequel l'enveloppe comprend de l'oxyde de silicium.

**5.** Film protecteur selon l'une quelconque des revendications précédentes, dans lequel l'enveloppe présente une épaisseur de 2 à 10 nm.

**6.** Film protecteur selon l'une quelconque des revendications précédentes, dans lequel les particules d'oxyde de zinc de type noyau-enveloppe présentent une taille moyenne de particule de 5 nm ou supérieure.

**7.** Film protecteur selon l'une quelconque des revendications précédentes, lequel comprend une couche barrière sur le film plastique ou sur la couche de revêtement.

8. Film protecteur selon la revendication 7, lequel comprend une couche barrière sur le film plastique.

9. Film protecteur selon la revendication 7 ou la revendication 8, dans lequel la couche barrière comprend au moins une couche organique et au moins une couche inorganique.

10. Film protecteur selon l'une quelconque des revendications précédentes, lequel présente une capacité d'absorption à 350 nm de 2 ou supérieure.

11. Film protecteur selon l'une quelconque des revendications précédentes, lequel présente une valeur de voile de 5 % ou inférieure.

12. Film protecteur selon l'une quelconque des revendications précédentes, dans lequel le noyau des particules d'oxyde de zinc de type noyau-enveloppe présente une taille moyenne de particule de 5 à 40 nm.

13. Feuille avant pour une cellule photovoltaïque comprenant un film protecteur comme défini dans l'une quelconque des revendications précédentes.

Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006255927 A
- JP 2004168057 A
- JP 2000334373 A
- JP 2004059421 A
- JP 2001058821 A
- JP 2009081123 A
- JP 2003081123 A
- JP 2009099973 A